# EUROPÄISCHE PATENTANMELDUNG

(11) **EP 4 803 410 A1**
(43) Veröffentlichungstag der Anmeldung: **09.09.2026**
(21) Anmeldenummer: 25162097.7
(22) Anmeldetag: 06.03.2025
(51) Int. Cl.: B62J 15/02, B62J 15/00

(54) **VORRICHTUNG FÜR DIE ANBRINGUNG EINES RADSCHÜTZERS AN EINEM FAHRRAD**

(71) Anmelder: SKS metaplast Scheffer-Klute GmbH, 59846 Sundern (DE)
(72) Erfinder: GRABSKI, Karsten, 59469 Ense (DE)
(74) Vertreter: Fritz Patent- und Rechtsanwälte PartmbB

(57) **Zusammenfassung**

Vorrichtung für die Anbringung eines Radschützers (1) an einem Fahrrad, umfassend mehrere Befestigungsteile (6), von denen jedes dazu eingerichtet ist, mit dem Radschützer (1) verbunden zu werden und mit jeweils einem an dem Fahrrad angeordneten Kupplungsteil (7) für die Anbringung des Radschützers (1) an dem Fahrrad zusammenzuwirken, wobei jedem der Kupplungsteile (7) eines der Befestigungsteile (6) zugeordnet ist, wobei die Vorrichtung dazu eingerichtet ist, dass jedes der Befestigungsteile (6) durch eine lineare Bewegung so mit dem zugeordneten Kupplungsteil (7) verbunden werden kann, dass die Verbindung zwischen dem Befestigungsteil (6) und dem zugeordneten Kupplungsteil (7) verriegelt ist.

## Beschreibung

Die vorliegende Erfindung betrifft eine Vorrichtung für die Anbringung eines Radschützers an einem Fahrrad, eine Strebe zur Verbindung eines Radschützers mit einem Fahrrad gemäß dem Oberbegriff des Anspruchs 13, einen Radschützer für ein Fahrrad gemäß dem Oberbegriff des Anspruchs 14 sowie ein Fahrrad gemäß dem Oberbegriff des Anspruchs 15.

Eine Vorrichtung der vorgenannten Art ist beispielsweise aus der TW 2022 25014 A bekannt. Die darin beschriebene Vorrichtung dient zur Befestigung eines Radschützers für ein Hinterrad an dem Rahmen des Fahrrads. Dabei ist vorgesehen, dass an dem Radschützer mehrere Streben angeordnet sind, die sich von dem Radschützer in radialer Richtung zu den Ausfallenden des Rahmens erstrecken, wobei die Streben an den Ausfallenden über eine Schraubverbindung angebracht sind. Derartige Verbindungen zur Anbringung eines Radschützers an einem Fahrrad sind üblich. Weiterhin ist zumeist ein Abschnitt des Radschützers direkt über eine Schraubverbindung an dem Rahmen angebracht. Eine vergleichbare Vorrichtung für die Anbringung eines Radschützers für ein Vorderrad an einem Fahrrad ist der TW 2022 25014 A ebenfalls offenbart.

Als nachteilig bei derartigen Vorrichtungen erweist sich, dass die Montage des Radschützers an dem Fahrrad wegen der vielen Schraubverbindungen vergleichsweise aufwändig ist. Insbesondere für einen Hersteller von Fahrrädern ist es wünschenswert, die Montage zu vereinfachen und trotzdem eine sichere, nicht einfach lösbare Befestigung des Radschützers an dem Fahrrad zu gewährleisten.

Das der vorliegenden Erfindung zugrunde liegende Problem ist die Schaffung einer Vorrichtung der eingangs genannten Art, die eine einfachere Montage des Radschützers an dem Fahrrad ermöglicht. Weiterhin sollen eine Strebe, ein Radschützer sowie ein Fahrrad der eingangs genannten Art mit einer derartigen Vorrichtung angegeben werden.

Dies wird erfindungsgemäß durch eine Vorrichtung der eingangs genannten Art mit den Merkmalen des Anspruchs 1, durch eine Strebe der eingangs genannten Art mit den kennzeichnenden Merkmalen des Anspruchs 13, durch einen Radschützer der eingangs genannten Art mit den kennzeichnenden Merkmalen des Anspruchs 14 sowie durch ein Fahrrad der eingangs genannten Art mit den kennzeichnenden Merkmalen des Anspruchs 15 erreicht. Die Unteransprüche betreffen bevorzugte Ausgestaltungen der Erfindung.

Gemäß Anspruch 1 umfasst die Vorrichtung mehrere Befestigungsteile, von denen jedes dazu eingerichtet ist, mit dem Radschützer verbunden zu werden und mit jeweils einem an dem Fahrrad angeordneten Kupplungsteil für die Anbringung des Radschützers an dem Fahrrad zusammenzuwirken, wobei jedem der Kupplungsteile eines der Befestigungsteile zugeordnet ist, wobei die Vorrichtung dazu eingerichtet ist, dass jedes der Befestigungsteile durch eine lineare Bewegung so mit dem zugeordneten Kupplungsteil verbunden werden kann, dass die Verbindung zwischen dem Befestigungsteil und dem zugeordneten Kupplungsteil verriegelt ist. Durch eine derartige Gestaltung lässt sich der Radschützer schnell und einfach an dem Fahrrad anbringen. Dabei kann jedes der Befestigungsteile beispielsweise auf das zugeordnete Kupplungsteil aufgeschoben oder aufgedrückt werden, um eine feste und sichere Verbindung zwischen dem Befestigungsteil und dem zugeordneten Kupplungsteil zu erzielen. Dazu kann die Vorrichtung insbesondere dazu eingerichtet sein, dass die verriegelte Verbindung zwischen dem Befestigungsteil und dem zugeordneten Kupplungsteil ohne die Verwendung eines Werkzeugs nicht zerstörungsfrei gelöst werden kann. Dadurch kann der Radschützer nicht irrtümlich gelöst werden. Weiterhin wird auch die Gefahr verringert, dass der Radschützer von Unbefugten von dem Fahrrad abmontiert wird. Trotzdem kann jedes der Befestigungsteile von dem zugeordneten Kupplungsteil mit einem geeigneten Werkzeug gelöst werden, so dass der Radschützer beispielsweise für Wartungsarbeiten von dem Fahrrad abmontiert werden kann.

Es besteht die Möglichkeit, dass jedes der Kupplungsteile einen ersten Abschnitt und einen sich an den ersten Abschnitt in einer axialen Richtung anschließenden zweiten Abschnitt aufweist, wobei der zweite Abschnitt in einer zu der axialen Richtung senkrechten Richtung gegenüber dem ersten Abschnitt zurückspringt und eine Nut oder einen Hinterschnitt bildet, wobei der erste Abschnitt auf der von dem Fahrrad abgewandten Seite des zweiten Abschnitts angeordnet ist. Es kann dabei vorgesehen sein, dass das Befestigungsteil ein elastisches Verriegelungselement aufweist, das im verbundenen Zustand des Befestigungsteils mit dem zugeordneten Kupplungsteil in der Nut oder dem Hinterschnitt des Kupplungsteils angeordnet ist und dabei den ersten Abschnitt hintergreift, insbesondere wobei die Vorrichtung dazu eingerichtet ist, dass das Befestigungsteil durch eine Bewegung in axialer Richtung so auf das Kupplungsteil aufgeschoben werden kann, dass das Verriegelungselement über den ersten Abschnitt hinweg in die Nut oder den Hinterschnitt bewegt werden kann und dort verrastet. Dabei kann das Verriegelungselement aus einem ersten Zustand, in dem das Befestigungsteil in axialer Richtung nicht von dem Kupplungsteil abgezogen werden kann, in einen zweiten Zustand überführt werden, in dem das Befestigungsteil von dem Kupplungsteil abgezogen werden kann, insbesondere wobei das Befestigungsteil dazu eingerichtet ist, dass das Verriegelungselement durch einen Schraubendreher aus dem ersten in den zweiten Zustand überführt werden kann. Ein Schraubendreher ist ein gängiges Werkzeug, dass von einem Fahrradfahrer einfach mitgeführt werden kann, um den Radschützer bei Bedarf von dem Fahrrad abzumontieren.

Es besteht die Möglichkeit, dass ein erstes und/oder ein zweites der Befestigungsteile dazu eingerichtet sind, an einer Strebe angebracht zu werden, die zur Verbindung des für ein Hinterrad vorgesehenen Radschützers mit einem der Ausfallenden des Rahmens des Fahrrads dient, insbesondere wobei ein erstes und ein zweites der Befestigungsteile dazu eingerichtet sind, an einer Umlaufstrebe angebracht zu werden, die zur Verbindung des für ein Hinterrad vorgesehenen Radschützers mit beiden der Ausfallenden des Rahmens des Fahrrads dient. Es besteht durchaus die Möglichkeit, dass anstelle einer Umlaufstrebe andere Streben vorgesehen werden, wie beispielsweise eine V-Strebe auf jeder Seite des Fahrrads. V-Streben sind beispielsweise aus der EP 1 439 115 A2 und der DE 296 07 628 U1 bekannt. Eine derartige V-Strebe wird an zwei voneinander beabstandeten Stellen mit dem Radschützer verbunden. Auch andere Streben, die weder als Umlaufstreben noch als V-Streben ausgebildet sind, können vorgesehen werden.

Es kann weiterhin vorgesehen sein, dass ein drittes der Befestigungsteile dazu eingerichtet ist, an einem Abschnitt des für ein Hinterrad vorgesehenen Radschützers angebracht zu werden und mit einem Kupplungsteil verbunden zu werden, das an einem Bremssteg des Rahmens des Fahrrads angeordnet ist. Weiterhin kann vorgesehen sein, dass ein viertes der Befestigungsteile dazu eingerichtet ist, an einem Abschnitt des für ein Hinterrad vorgesehenen Radschützers angebracht zu werden und mit einem Kupplungsteil verbunden zu werden, das an einem Tretlagerbefestigungssteg des Rahmens des Fahrrads angeordnet ist. Durch die Mehrzahl von Befestigungsteilen und den dazu korrespondierenden, an geeigneten Stellen am Rahmen des Fahrrads angeordneten Kupplungsteilen kann der für ein Hinterrad vorgesehene Radschützer stabil und sicher am Fahrrad angebracht werden.

Es besteht alternativ die Möglichkeit, dass ein erstes und/oder ein zweites der Befestigungsteile dazu eingerichtet sind, an einer Strebe angebracht zu werden, die zur Verbindung des für ein Vorderrad vorgesehenen Radschützers mit der Gabel des Fahrrads dient, insbesondere wobei ein erstes und ein zweites der Befestigungsteile dazu eingerichtet sind, an einer Umlaufstrebe angebracht zu werden, die zur Verbindung des für ein Vorderrad vorgesehenen Radschützers mit der Gabel des Fahrrads dient. Auch an dem Vorderrad besteht durchaus die Möglichkeit, dass anstelle einer Umlaufstrebe andere Streben vorgesehen werden, wie beispielsweise eine V-Strebe auf jeder Seite des Fahrrads.

Es kann vorgesehen sein, dass ein drittes der Befestigungsteile dazu eingerichtet ist, an einem Abschnitt des für ein Vorderrad vorgesehenen Radschützers angebracht zu werden und mit einem Kupplungsteil verbunden zu werden, das an der Gabel des Fahrrads angeordnet ist. Durch die Mehrzahl von Befestigungsteilen und den dazu korrespondierenden, an geeigneten Stellen an der Gabel des Fahrrads angeordneten Kupplungsteilen kann der für ein Vorderrad vorgesehene Radschützer stabil und sicher am Fahrrad angebracht werden.

Es besteht die Möglichkeit, dass die Vorrichtung mindestens eines der Kupplungsteile umfasst, wobei dieses Kupplungsteil dazu eingerichtet ist, an einem Fahrrad angebracht zu werden und mit einem der Befestigungsteile für die Anbringung des Radschützers an dem Fahrrad zusammenzuwirken. Dabei können mehrere oder sämtliche der Kupplungsteile von der Vorrichtung umfasst sein. Weiterhin kann vorgesehen sein, dass das mindestens eine Kupplungsteil ein Außengewinde aufweist, das in ein an dem Fahrrad angeordnetes Innengewinde eingeschraubt werden kann. Das erleichtert für den Benutzer die Anbringung der Radschützer an dem Fahrrad.

Alternativ kann auch mindestens eines der Kupplungsteile, insbesondere können mehrere oder sämtliche der Kupplungsteile, an dem Rahmen oder der Gabel des Fahrrads vormontiert werden. Dies erleichtert für den Hersteller des Fahrrads die Montage der Radschützer.

Gemäß Anspruch 13 ist vorgesehen, dass an der Strebe mindestens ein Befestigungsteil einer erfindungsgemäßen Vorrichtung angebracht ist, insbesondere wobei die Strebe eine Umlaufstrebe ist, die zwei Abschnitte aufweist, an denen jeweils eines der Befestigungsteile angebracht ist. Es besteht durchaus die Möglichkeit, dass anstelle einer Umlaufstrebe andere Streben vorgesehen werden, wie beispielsweise eine V-Strebe auf jeder Seite des Fahrrads.

Gemäß Anspruch 14 ist vorgesehen, dass an dem Radschützer mindestens ein Befestigungsteil einer erfindungsgemäßen Vorrichtung angebracht ist.

Gemäß Anspruch 15 ist vorgesehen, dass an dem Fahrrad mindestens ein Kupplungsteil einer erfindungsgemäßen Vorrichtung angebracht ist, insbesondere wobei das mindestens eine Kupplungsteil an einem der Ausfallenden des Rahmens und/oder an einem Bremssteg des Rahmens und/oder an einem Tretlagerbefestigungssteg des Rahmens und/oder an der Gabel angeordnet ist.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine perspektivische Ansicht des hinteren Teil des Rahmens eines erfindungsgemäßen Fahrrads mit einem erfindungsgemäßen Radschützer für ein Hinterrad, einer erfindungsgemäßen Strebe und einer erfindungsgemäßen Vorrichtung in einem nicht verbundenen Zustand der Befestigungsteile und Kupplungsteile;
- Fig. 2: eine perspektivische Ansicht des Fahrrads gemäß Fig. 1 in einem verbundenen Zustand der Befestigungsteile und Kupplungsteile;
- Fig. 3: ein Detail gemäß dem Pfeil III in Fig. 2;
- Fig. 4: ein Detail gemäß dem Pfeil IV in Fig. 2;
- Fig. 5: ein Detail gemäß dem Pfeil V in Fig. 2;
- Fig. 6: eine Seitenansicht des Details gemäß Fig. 5;
- Fig. 7: einen Schnitt gemäß den Pfeilen VII - VII in Fig. 6;
- Fig. 8: einen Fig. 7 entsprechenden Schnitt in einem nicht verbundenen Zustand der Befestigungsteile und Kupplungsteile;
- Fig. 9: eine perspektivische Ansicht des Details gemäß Fig. 5 in einem nicht verbundenen Zustand der Befestigungsteile und Kupplungsteile;
- Fig. 10: eine perspektivische Ansicht des Details gemäß Fig. 5 in einem verbundenen Zustand der Befestigungsteile und Kupplungsteile;
- Fig. 11: ein Detail der Fig. 10 im ersten, verriegelten Zustand des Verriegelungselements;
- Fig. 12: eine Seitenansicht des Details gemäß Fig. 11;
- Fig. 13: einen Schnitt gemäß den Pfeilen XIII - XIII in Fig. 12;
- Fig. 14: ein Detail der Fig. 10 im zweiten, entriegelten Zustand des Verriegelungselements;
- Fig. 15: eine Seitenansicht des Details gemäß Fig. 14;
- Fig. 16: einen Schnitt gemäß den Pfeilen XVI - XVI in Fig. 15;
- Fig. 17: eine perspektivische Ansicht der Gabel des Fahrrads gemäß Fig. 1 mit einem erfindungsgemäßen Radschützer für ein Vorderrad, einer erfindungsgemäßen Strebe und einer erfindungsgemäßen Vorrichtung in einem nicht verbundenen Zustand der Befestigungsteile und Kupplungsteile;
- Fig. 18: ein Detail gemäß dem Pfeil XVIII in Fig. 17;
- Fig. 19: ein Detail gemäß dem Pfeil XIX in Fig. 17;
- Fig. 20: das Detail gemäß Fig. 19 in einem verbundenen Zustand der Befestigungsteile und Kupplungsteile;
- Fig. 21: eine Seitenansicht des Fahrrads gemäß Fig. 17 in einem verbundenen Zustand der Befestigungsteile und Kupplungsteile;
- Fig. 22: einen Schnitt gemäß den Pfeilen XXII - XXII in Fig. 21 im ersten, verriegelten Zustand des Verriegelungselements;
- Fig. 23: ein Detail gemäß dem Pfeil XXIII in Fig. 22;
- Fig. 24: das Detail gemäß Fig. 23 im zweiten, entriegelten Zustand des Verriegelungselements.

Es ist nicht notwendig, dass eine erfindungsgemäße Vorrichtung alle nachfolgend beschriebenen Merkmale aufweist. Es ist auch möglich, dass eine erfindungsgemäße Vorrichtung nur einzelne Merkmale der nachfolgend beschriebenen Ausführungsbeispiele aufweist.

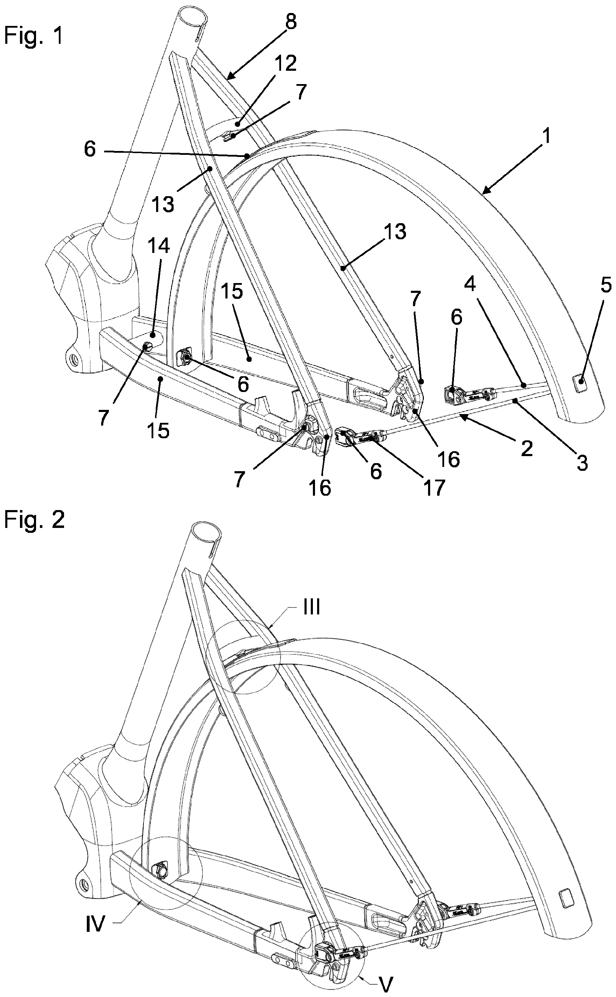

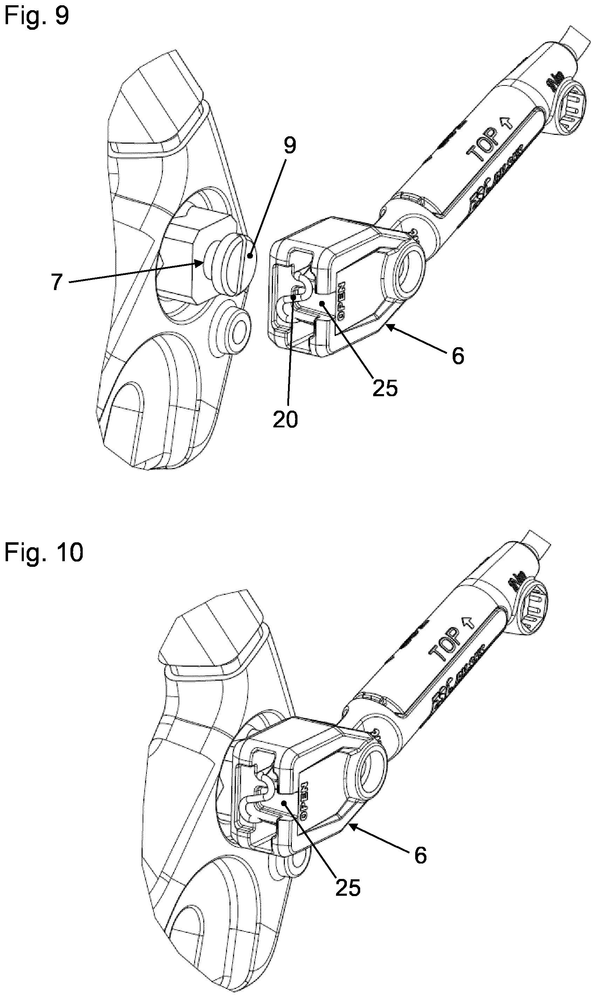

Die in den Fig. 1 bis Fig. 16 abgebildete Ausführungsform der Vorrichtung dient zur Anbringung eines für ein Hinterrad vorgesehenen Radschützers 1 an einem Fahrrad. Der Radschützer 1 kann aus Metall, vorzugsweise jedoch aus Kunststoff bestehen. Der Radschützer 1 ist torusähnlich gebogen und dem Verlauf eines Fahrradreifens angepasst.

An dem Radschützer 1 ist eine Strebe angebracht, die als Umlaufstrebe 2 ausgebildet ist. Dabei weist die Umlaufstrebe 2 zwei im Wesentlichen in die gleiche Richtung verlaufende Abschnitte 3, 4 (siehe Fig. 1) und einen diese miteinander verbindenden Querabschnitt auf, der in Fig. 1 von dem Radschützer 1 verdeckt ist. Die Umlaufstrebe 2 kann aus Metall, beispielsweise aus gebogenem Draht bestehen. Durch eine in dieser Anmeldung nicht näher beschriebene Einrichtung 5 kann der Querabschnitt der Umlaufstrebe 2 an dem Radschützer 1 befestigt sein. Diese Einrichtung kann eine Einrichtung gemäß DE 10 2009 060 429 A1 sein. Es besteht jedoch durchaus die Möglichkeit, andere Einrichtungen vorzusehen.

Die Vorrichtung für die Anbringung des Radschützers 1 an dem Fahrrad umfasst vier Befestigungsteile 6, von denen jedes dazu eingerichtet ist, mit dem Radschützer 1 verbunden zu werden. Es sind weiterhin vier Kupplungsteile 7 vorgesehen, mit denen jeweils eines der Befestigungsteile 6 für die Anbringung des Radschützers 1 an dem Fahrrad zusammenzuwirken kann.

Eines, mehrere oder sämtliche der Kupplungsteile 7 können von der Vorrichtung umfasst sein. In diesem Fall können sie jeweils ein Außengewinde aufweisen, das in ein an dem Fahrrad angeordnetes Innengewinde eingeschraubt werden kann. Dadurch können die Kupplungsteile 7 einfach an dem Fahrrad nachgerüstet werden.

Es besteht alternativ die Möglichkeit, dass eines, mehrere oder sämtliche der Kupplungsteile 7 Teil des Fahrrads sind. Dazu können die Kupplungsteile 7 an dem Rahmen 8 des Fahrrads vormontiert sein, wodurch für den Hersteller des Fahrrads die Montage des Radschützers 1 erleichtert wird.

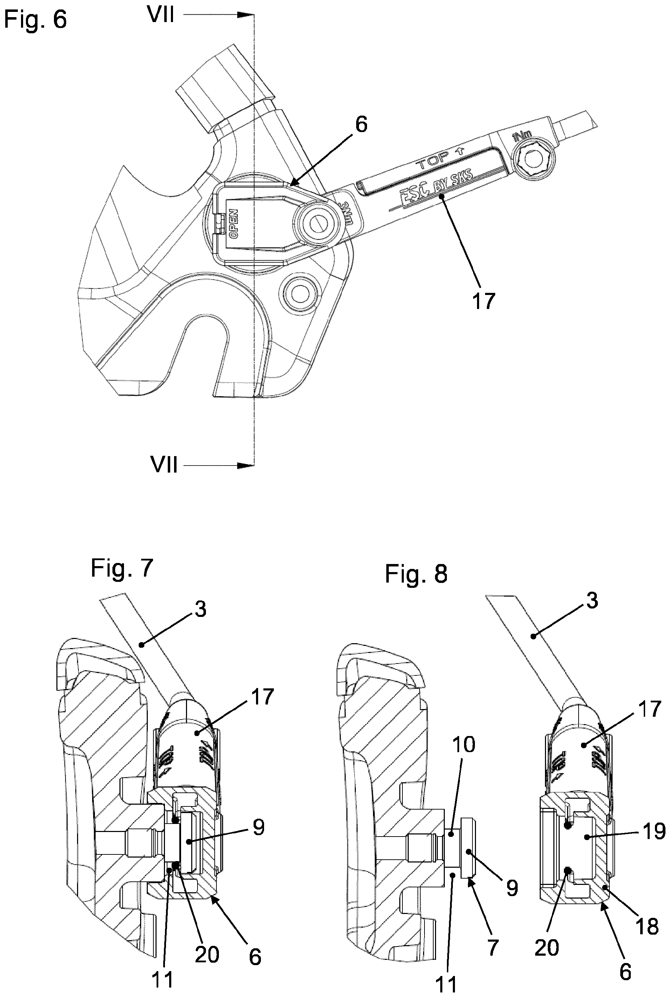

Jedes der Kupplungsteile 7 ist rotationssymmetrisch ausgebildet und weist eine Symmetrieachse auf, die sich in einer axialen Richtung erstreckt. Jedes der Kupplungsteile 7 weist einen ersten Abschnitt 9 und einen sich an den ersten Abschnitt 9 in der axialen Richtung anschließenden zweiten Abschnitt 10 auf (siehe beispielsweise Fig. 8). Der erste Abschnitt 9 ist auf der von dem Fahrrad abgewandten Seite des zweiten Abschnitts 10 angeordnet. Dabei springt der zweite Abschnitt 10 in einer zu der axialen Richtung senkrechten Richtung gegenüber dem ersten Abschnitt 9 zurück und bildet eine Nut 11 beziehungsweise einen Hinterschnitt.

In dem abgebildeten Ausführungsbeispiel sind ein erstes und ein zweites der Kupplungsteile 7 an den Ausfallenden 16 des Rahmens 8 des Fahrrads angeordnet. Auf jeder Seite des Fahrrads ist ein Ausfallende 16 in dem Verbindungsbereich der Sitzstrebe 13 mit der Kettenstrebe 15 angeordnet. Ein erstes und ein zweites der Befestigungsteile 6 der Vorrichtung sind jeweils an dem von dem Radschützer 1 abgewandten Ende eines der Abschnitte 3, 4 der Umlaufstrebe 2 angeordnet, so dass sie jeweils mit dem an dem Ausfallende 16 angeordneten Kupplungsteil 7 verbunden werden können (siehe Fig. 1 und Fig. 7).

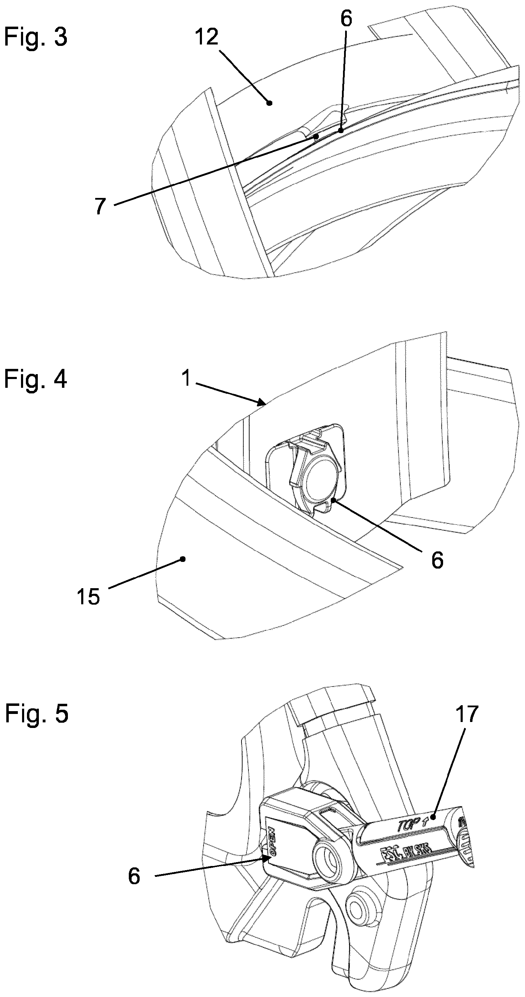

In dem abgebildeten Ausführungsbeispiel ist jeweils zwischen dem Ende des Abschnitts 3, 4 der Umlaufstrebe 2 und dem Befestigungsteil 6 eine Sicherungsvorrichtung 17 angeordnet (siehe beispielsweise Fig. 5 und Fig. 7). Diese Sicherungsvorrichtung 17 besteht aus zwei Teilen, die sich bei auf sie einwirkenden Kräften, die eine vorgegebene Kraft überschreiten, voneinander lösen. Dadurch kann beispielsweise dann, wenn ein Stock oder ein vergleichbarer Gegenstand zwischen die Speichen des Rades gelangt ist, die Verbindung zwischen dem Radschützer 1 und dem Rahmen 8 gelöst werden, um einen Unfall zu vermeiden. Die Sicherungsvorrichtung 17 ist optional und kann auch weggelassen werden.

In dem abgebildeten Ausführungsbeispiel ist ein drittes der Kupplungsteile 7 an einem Bremssteg 12 des Rahmens 8 des Fahrrads angeordnet (siehe Fig. 1). Der Bremssteg 12 ist ein Steg zwischen den Sitzstreben 13 des Rahmens 8. Ein drittes der Befestigungsteile 6 der Vorrichtung ist so an dem Radschützer 1 angebracht, dass es mit dem an dem Bremssteg 12 angeordneten Kupplungsteil 7 verbunden werden kann (siehe Fig. 1 und Fig. 3).

Ein viertes der Kupplungsteile 7 ist an einem Tretlagerbefestigungssteg 14 des Rahmens 8 des Fahrrads angeordnet. Der Tretlagerbefestigungssteg 14 ist ein Steg zwischen den Kettenstreben 15 des Rahmens 8. Ein viertes der Befestigungsteile 6 der Vorrichtung ist so an dem Radschützer 1 angebracht, dass es mit dem an dem Tretlagerbefestigungssteg 14 angeordneten Kupplungsteil 7 verbunden werden kann (siehe Fig. 1 und Fig. 3).

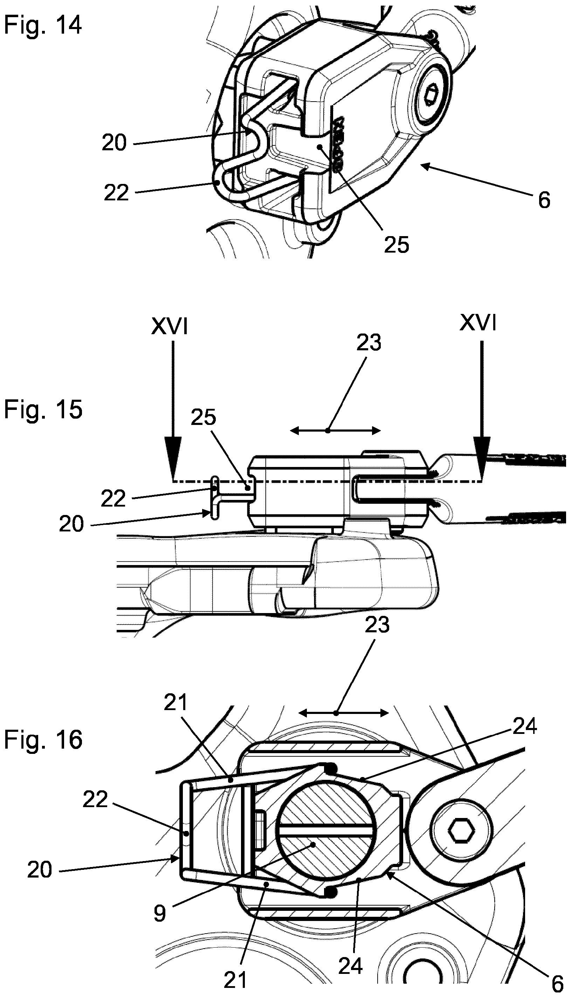

Die Befestigungsteile 6 sind im Wesentlichen gleich aufgebaut. Ein jedes der Befestigungsteile 6 weist ein Gehäuse 18 mit einem Hohlraum 19 auf (siehe beispielsweise Fig. 8). Das Befestigungsteil 6 weist weiterhin ein elastisches Verriegelungselement 20 auf, das insbesondere als Spange aus Metall, vorzugsweise als Spange aus Federstahl ausgebildet ist. Das Verriegelungselement 20 weist zwei Schenkel 21 und einen diese Schenkel 21 verbindenden Verbindungsabschnitt 22 auf (siehe beispielsweise Fig. 16).

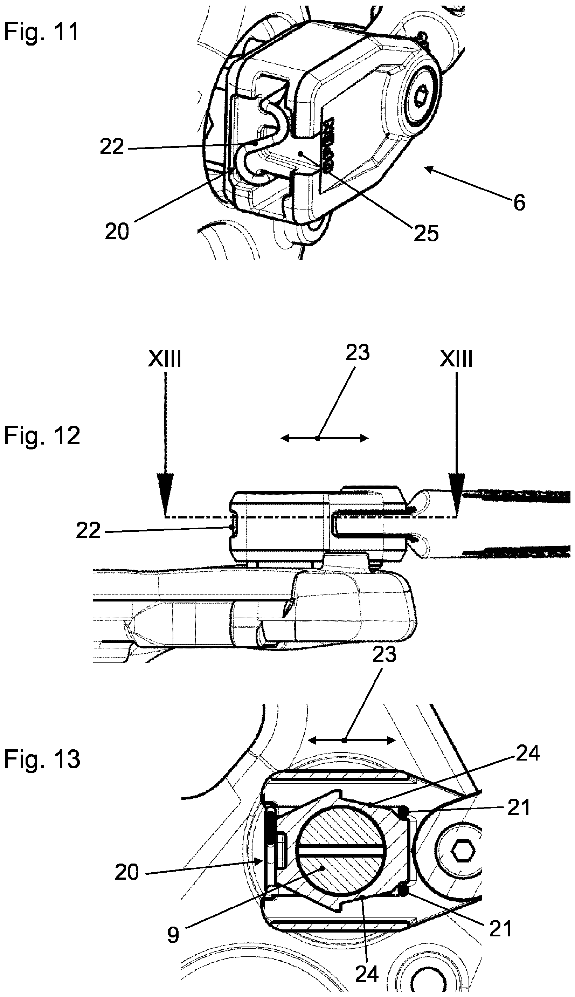

Das Verriegelungselement 20 ist relativ zu dem Gehäuse 18 in einer Richtung beweglich, die in Fig. 13 und Fig. 16 durch einen Pfeil mit dem Bezugszeichen 23 angedeutet ist. Das Gehäuse 18 weist zwei geneigte Flächen 24 auf, an denen die Enden der Schenkel 21 während der Bewegung des Verriegelungselements 20 entlanggleiten.

Jedes der Befestigungsteile 6 kann mit einem der Kupplungsteile 7 so verbunden werden, dass in dem miteinander verbundenen Zustand von Befestigungsteil 6 und Kupplungsteil 7 der erste Abschnitt 9 des Kupplungsteils 7 in dem Hohlraum 19 des Befestigungsteils 6 angeordnet ist. Weiterhin ist das Verriegelungselement 20 in dem miteinander verbundenen Zustand von Befestigungsteil 6 und Kupplungsteil 7 teilweise in der Nut 11 angeordnet.

Das Verriegelungselement 20 kann durch die Bewegung in der Richtung 23 relativ zu dem Gehäuse 18 aus einem ersten, verriegelten Zustand in einen zweiten, entriegelten Zustand überführt werden. Fig. 11 und Fig. 13 zeigen das Verriegelungselement 20 in dem ersten, verriegelten Zustand. In diesem ersten Zustand befinden sich die Schenkel 21 des Verriegelungselements 20 in der Nut 11 des Kupplungsteils 7, so dass das Befestigungsteil 6 in diesem ersten Zustand nicht von dem Kupplungsteil 7 abgezogen werden kann. Fig. 14 und Fig. 16 zeigen das Verriegelungselement 20 in dem zweiten, entriegelten Zustand. In diesem zweiten Zustand haben sich die Enden der Schenkel 21 nach links in Fig. 16 entlang der geneigten Flächen 24 bewegt und wurden von diesen Flächen radial nach außen beziehungsweise nach oben und unten in Fig. 16 bewegt. Dadurch befinden sich die Schenkel 21 in diesem zweiten Zustand des Verriegelungselements 20 nicht in der Nut 11 des Kupplungsteils 7, so dass der erste Abschnitt 9 des Kupplungsteils 7 in axialer Richtung zwischen den Schenkeln 21 hindurchbewegt werden kann und dadurch das Befestigungsteil 6 in axialer Richtung von dem Kupplungsteil 7 abgezogen werden kann.

Die Vorrichtung ist dazu eingerichtet, dass jedes der Befestigungsteile 6 durch eine lineare Bewegung in axialer Richtung so mit dem zugeordneten Kupplungsteil 7 verbunden werden kann, dass die Verbindung zwischen dem Befestigungsteil 6 und dem zugeordneten Kupplungsteil 7 verriegelt ist. Bei dieser linearen Bewegung wird das Verriegelungselement 20 beziehungsweise werden die Schenkel 21 des Verriegelungselements 20 über den ersten Abschnitt 9 hinweg in die Nut 11 bewegt und dort verrastet (siehe dazu Fig. 7 und Fig. 8).

Die verriegelte Verbindung zwischen dem Befestigungsteil 6 und dem zugeordneten Kupplungsteil 7 kann ohne die Verwendung eines Werkzeugs nicht zerstörungsfrei gelöst werden. Das Befestigungsteil 6 weist eine Aussparung 25 auf, in die ein nicht abgebildeter Schraubendreher eingeführt werden kann. Die Spitze des Schraubendrehers kann in dem in die Aussparung 25 eingeführten Zustand an dem Verbindungsabschnitt 22 anliegen. Durch Bewegung des Schraubendrehers in der Richtung 23 nach links in Fig. 12 und Fig. 13 kann das Verriegelungselement 20 aus dem ersten Zustand (siehe die Fig. 11 bis Fig. 13) in den zweiten Zustand überführt werden (siehe die Fig. 14 bis Fig. 16).

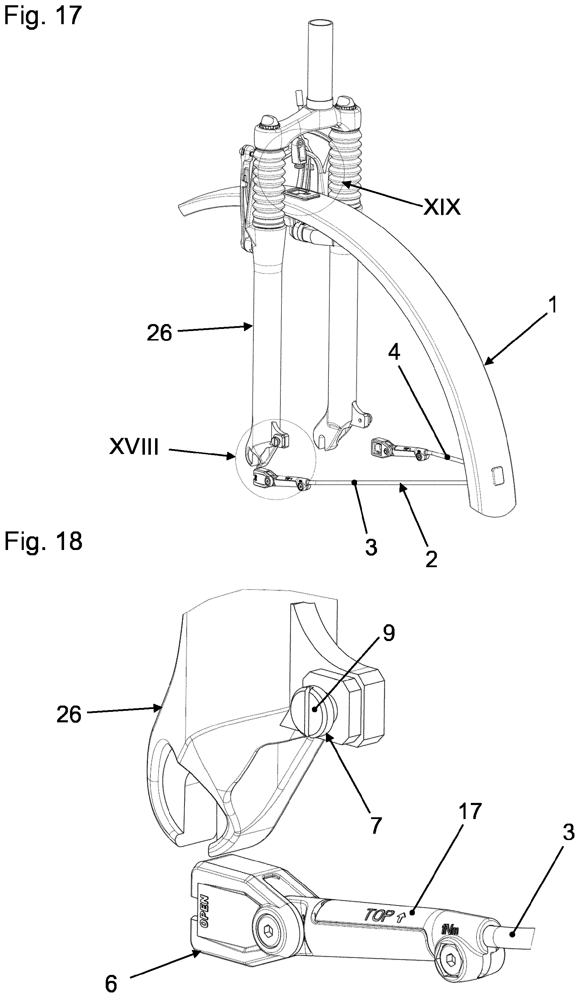

Die in den Fig. 17 bis Fig. 24 abgebildete Ausführungsform der Vorrichtung dient zur Anbringung eines für ein Vorderrad vorgesehenen Radschützers 1 an einem Fahrrad. Auch an dem für ein Vorderrad vorgesehenen Radschützer 1 ist eine Strebe angebracht, die als Umlaufstrebe 2 ausgebildet ist.

Die Vorrichtung für die Anbringung des für ein Vorderrad vorgesehenen Radschützers 1 an dem Fahrrad umfasst drei Befestigungsteile 6, von denen jedes dazu eingerichtet ist, mit dem Radschützer 1 verbunden zu werden. Es sind weiterhin drei Kupplungsteile 7 vorgesehen, mit denen jeweils eines der Befestigungsteile 6 für die Anbringung des Radschützers 1 an dem Fahrrad zusammenzuwirken kann.

Auch bei der Vorrichtung für die Anbringung des für ein Vorderrad vorgesehenen Radschützers 1 an dem Fahrrad können eines, mehrere oder sämtliche der Kupplungsteile 7 von der Vorrichtung umfasst sein. Alternativ können auch bei dieser Vorrichtung, eines, mehrere oder sämtliche der Kupplungsteile 7 Teil des Fahrrads sein.

Die Kupplungsteile 7 und die Befestigungsteile 6 der Vorrichtung für die Anbringung des für ein Vorderrad vorgesehenen Radschützers 1 an dem Fahrrad sind im Wesentlichen gleich aufgebaut wie bei der Vorrichtung gemäß Fig. 1 bis Fig. 16 für die Anbringung des für ein Hinterrad vorgesehenen Radschützers 1 an dem Fahrrad.

In dem in den Fig. 17 bis 24 abgebildeten Ausführungsbeispiel sind ein erstes und ein zweites der Kupplungsteile 7 in dem unteren Endbereich der Gabel 26 des Fahrrads angeordnet (siehe Fig. 17). Ein erstes und ein zweites der Befestigungsteile 6 der Vorrichtung sind jeweils an dem von dem Radschützer 1 abgewandten Ende eines der Abschnitte 3, 4 der Umlaufstrebe 2 angeordnet, so dass sie jeweils mit dem an der Gabel 26 angeordneten Kupplungsteil 7 verbunden werden können (siehe Fig. 17 und Fig. 18).

Auch bei dem abgebildeten Ausführungsbeispiel gemäß den Fig. 17 bis 24 ist jeweils zwischen dem Ende des Abschnitts 3, 4 der Umlaufstrebe 2 und dem Befestigungsteil 6 eine optionale Sicherungsvorrichtung 17 angeordnet (siehe beispielsweise Fig. 18).

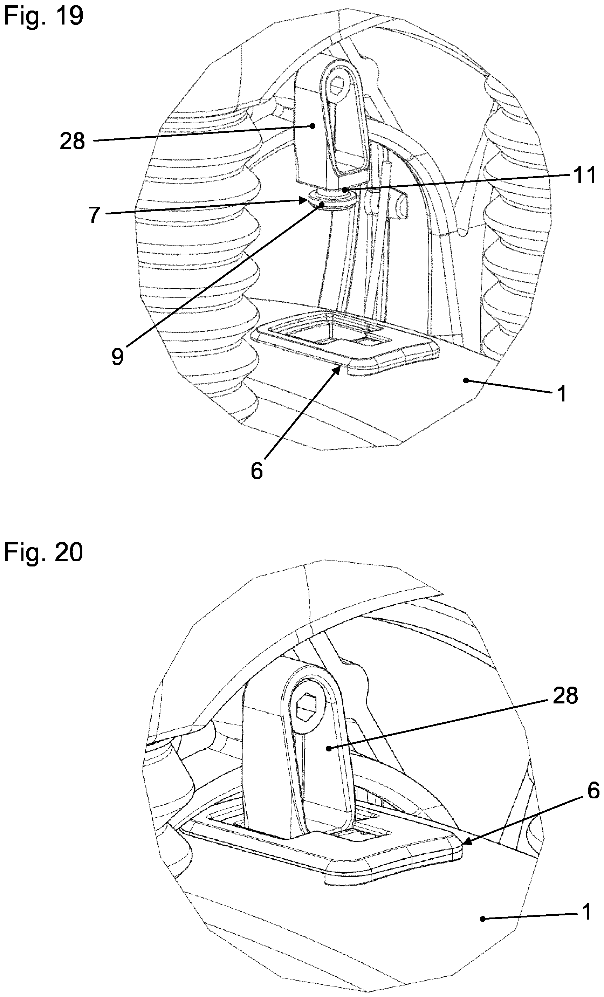

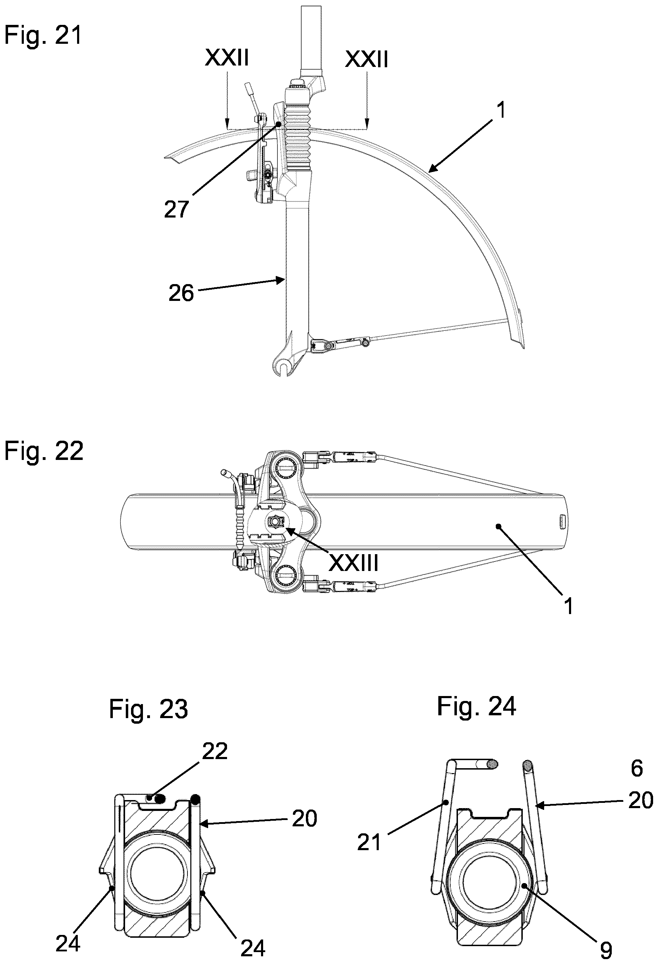

In dem in den Fig. 17 bis 24 abgebildeten Ausführungsbeispiel ist ein drittes der Kupplungsteile 7 an der Gabel 26 des Fahrrads, insbesondere an der Gabelbrücke 27 angeordnet (siehe Fig. 21). Das dritte Kupplungsteil 7 weist dabei ein Verlängerungsteil 28 auf, das gewährleistet, dass der erste Abschnitt 9 des Kupplungsteils 7 ausreichend nah an dem Radschützer 1 angeordnet ist. Ein drittes der Befestigungsteile 6 der Vorrichtung ist so an dem Radschützer 1 angebracht, dass es mit dem an Gabelbrücke 27 angeordneten Kupplungsteil 7 verbunden werden kann (siehe Fig. 19 bis Fig. 24).

## Patentansprüche

1. Vorrichtung für die Anbringung eines Radschützers (1) an einem Fahrrad, umfassend mehrere Befestigungsteile (6), von denen jedes dazu eingerichtet ist, mit dem Radschützer (1) verbunden zu werden und mit jeweils einem an dem Fahrrad angeordneten Kupplungsteil (7) für die Anbringung des Radschützers (1) an dem Fahrrad zusammenzuwirken, wobei jedem der Kupplungsteile (7) eines der Befestigungsteile (6) zugeordnet ist, wobei die Vorrichtung dazu eingerichtet ist, dass jedes der Befestigungsteile (6) durch eine lineare Bewegung so mit dem zugeordneten Kupplungsteil (7) verbunden werden kann, dass die Verbindung zwischen dem Befestigungsteil (6) und dem zugeordneten Kupplungsteil (7) verriegelt ist.

2. Vorrichtung nach Anspruch 1, **dadurch gekennzeichnet, dass** die Vorrichtung dazu eingerichtet ist, dass die verriegelte Verbindung zwischen dem Befestigungsteil (6) und dem zugeordneten Kupplungsteil (7) ohne die Verwendung eines Werkzeugs nicht zerstörungsfrei gelöst werden kann.

3. Vorrichtung nach einem der Ansprüche 1 oder 2, **dadurch gekennzeichnet, dass** jedes der Kupplungsteile (7) einen ersten Abschnitt (9) und einen sich an den ersten Abschnitt (9) in einer axialen Richtung anschließenden zweiten Abschnitt (10) aufweist, wobei der zweite Abschnitt (10) in einer zu der axialen Richtung senkrechten Richtung gegenüber dem ersten Abschnitt (9) zurückspringt und eine Nut (11) oder einen Hinterschnitt bildet, wobei der erste Abschnitt (9) auf der von dem Fahrrad abgewandten Seite des zweiten Abschnitts (10) angeordnet ist.

4. Vorrichtung nach Anspruch 3, **dadurch gekennzeichnet, dass** das Befestigungsteil (6) ein elastisches Verriegelungselement (20) aufweist, das im verbundenen Zustand des Befestigungsteils (6) mit dem zugeordneten Kupplungsteil (7) in der Nut (11) oder dem Hinterschnitt des Kupplungsteils (7) angeordnet ist und dabei den ersten Abschnitt (9) hintergreift, insbesondere wobei die Vorrichtung dazu eingerichtet ist, dass das Befestigungsteil (6) durch eine Bewegung in axialer Richtung so auf das Kupplungsteil (7) aufgeschoben werden kann, dass das Verriegelungselement (20) über den ersten Abschnitt (9) hinweg in die Nut (11) oder den Hinterschnitt bewegt werden kann und dort verrastet.

5. Vorrichtung nach Anspruch 4, **dadurch gekennzeichnet, dass** das Verriegelungselement (20) aus einem ersten Zustand, in dem das Befestigungsteil (6) in axialer Richtung nicht von dem Kupplungsteil (7) abgezogen werden kann, in einen zweiten Zustand überführt werden kann, in dem das Befestigungsteil (6) von dem Kupplungsteil (7) abgezogen werden kann, insbesondere wobei das Befestigungsteil (6) dazu eingerichtet ist, dass das Verriegelungselement (20) durch einen Schraubendreher aus dem ersten in den zweiten Zustand überführt werden kann.

6. Vorrichtung nach einem der Ansprüche 1 bis 5, **dadurch gekennzeichnet, dass** ein erstes und/oder ein zweites der Befestigungsteile (6) dazu eingerichtet sind, an einer Strebe angebracht zu werden, die zur Verbindung des für ein Hinterrad vorgesehenen Radschützers (1) mit einem der Ausfallenden (16) des Rahmens (8) des Fahrrads dient, insbesondere wobei ein erstes und ein zweites der Befestigungsteile (6) dazu eingerichtet sind, an einer Umlaufstrebe (2) angebracht zu werden, die zur Verbindung des für ein Hinterrad vorgesehenen Radschützers (1) mit beiden der Ausfallenden (16) des Rahmens (8) des Fahrrads dient.

7. Vorrichtung nach einem der Ansprüche 1 bis 6, **dadurch gekennzeichnet, dass** ein drittes der Befestigungsteile (6) dazu eingerichtet ist, an einem Abschnitt des für ein Hinterrad vorgesehenen Radschützers (1) angebracht zu werden und mit einem Kupplungsteil (7) verbunden zu werden, das an einem Bremssteg (12) des Rahmens (8) des Fahrrads angeordnet ist.

8. Vorrichtung nach einem der Ansprüche 1 bis 7, **dadurch gekennzeichnet, dass** ein viertes der Befestigungsteile (6) dazu eingerichtet ist, an einem Abschnitt des für ein Hinterrad vorgesehenen Radschützers (1) angebracht zu werden und mit einem Kupplungsteil (7) verbunden zu werden, das an einem Tretlagerbefestigungssteg (14) des Rahmens (8) des Fahrrads angeordnet ist.

9. Vorrichtung nach einem der Ansprüche 1 bis 5, **dadurch gekennzeichnet, dass** ein erstes und/oder ein zweites der Befestigungsteile (6) dazu eingerichtet sind, an einer Strebe angebracht zu werden, die zur Verbindung des für ein Vorderrad vorgesehenen Radschützers (1) mit der Gabel (26) des Fahrrads dient, insbesondere wobei ein erstes und ein zweites der Befestigungsteile (6) dazu eingerichtet sind, an einer Umlaufstrebe (2) angebracht zu werden, die zur Verbindung für ein Vorderrad vorgesehenen Radschützers (1) mit der Gabel (26) des Fahrrads dient.

10. Vorrichtung nach einem der Ansprüche 1 bis 5 oder nach Anspruch 9, **dadurch gekennzeichnet, dass** ein drittes der Befestigungsteile (6) dazu eingerichtet ist, an einem Abschnitt des für ein Vorderrad vorgesehenen Radschützers (1) angebracht zu werden und mit einem Kupplungsteil (7) verbunden zu werden, das an der Gabel (26) des Fahrrads angeordnet ist.

11. Vorrichtung nach einem der Ansprüche 1 bis 10, **dadurch gekennzeichnet, dass** die Vorrichtung mindestens eines der Kupplungsteile (7) umfasst, wobei dieses Kupplungsteil (7) dazu eingerichtet ist, an einem Fahrrad angebracht zu werden und mit einem der Befestigungsteile (6) für die Anbringung des Radschützers (1) an dem Fahrrad zusammenzuwirken.

12. Vorrichtung nach Anspruch 11, **dadurch gekennzeichnet, dass** das mindestens eine Kupplungsteil (7) ein Außengewinde aufweist, das in ein an dem Fahrrad angeordnetes Innengewinde eingeschraubt werden kann.

13. Strebe zur Verbindung eines Radschützers (1) mit einem Fahrrad, **dadurch gekennzeichnet, dass** an der Strebe mindestens ein Befestigungsteil (6) einer Vorrichtung nach einem der Ansprüche 1 bis 12 angebracht ist, insbesondere wobei die Strebe eine Umlaufstrebe (2) ist, die zwei Abschnitte (3, 4) aufweist, an denen jeweils eines der Befestigungsteile (6) angebracht ist.

14. Radschützer (1) für ein Fahrrad, **dadurch gekennzeichnet, dass** an dem Radschützer (1) mindestens ein Befestigungsteil (6) einer Vorrichtung nach einem der Ansprüche 1 bis 12 angebracht ist.

15. Fahrrad, umfassend ein Vorderrad, ein Hinterrad, eine Gabel (26) und einen Rahmen (8), **dadurch gekennzeichnet, dass** an dem Fahrrad mindestens ein Kupplungsteil (7) einer Vorrichtung nach einem der Ansprüche 1 bis 12 angebracht ist, insbesondere wobei das mindestens eine Kupplungsteil (7) an einem der Ausfallenden (16) des Rahmens (8) und/oder an einem Bremssteg (12) des Rahmens (8) und/oder an einem Tretlagerbefestigungssteg (14) des Rahmens (8) und/oder an der Gabel (26) angeordnet ist.
